# EUROPÄISCHE PATENTSCHRIFT

(11) **EP 2 089 670 B1**
(45) Veröffentlichungstag und Bekanntmachung des Hinweises auf die Patenterteilung: **23.06.2010**
(21) Anmeldenummer: 07856418.4
(22) Anmeldetag: 06.12.2007
(51) Int. Cl.: G01B 11/06, G01B 11/245

(54) **VERFAHREN UND VORRICHTUNG ZUR DICKENMESSUNG**
METHOD AND DEVICE FOR THICKNESS MEASUREMENT
PROCÉDÉ ET DISPOSITIF DE MESURE D'ÉPAISSEUR

(30) Priorität: 15.12.2006 DE 102006059415
(43) Veröffentlichungstag der Anmeldung: 19.08.2009
(73) Patentinhaber: Fraunhofer-Gesellschaft zur Förderung der angewandten Forschung e.V., 80686 München (DE)
(72) Erfinder: SCHMITT, Peter, 91058 Erlangen (DE); KOSTKA, Günther, 91056 Erlangen (DE)
(74) Vertreter: Schenk, Markus
(86) Internationale Anmeldenummer: PCT/EP2007/010613
(87) Internationale Veröffentlichungsnummer: WO 2008/071338

(56) Entgegenhaltungen:
- WO-A-91/08439
- DE-A1- 4 220 501
- US-A- 4 564 296
- US-A- 4 803 371
- CIELO P: "OPTICAL SENSORS FOR ON-LINE INSPECTION OF INDUSTRIAL MATERIALS" OPTICAL ENGINEERING, SOC. OF PHOTO-OPTICAL INSTRUMENTATION ENGINEERS. BELLINGHAM, US, Bd. 32, Nr. 9, 1. September 1993 (1993-09-01), Seiten 2130-2137, XP000396830 ISSN: 0091-3286

## Beschreibung

Die vorliegende Erfindung befasst sich mit der Dickenmessung von ausgedehnten geometrischen Objekten und insbesondere damit, wie die Dicke von in Bahnen hergestellten Materialien, wie Blechen, Folien oder Papier effizient bestimmt werden kann.

Bei der Dickenmessung von geometrisch ausgedehnten Objekten ergeben sich eine Reihe von Problemen, insbesondere wenn, wie beispielsweise bei industriell vorgefertigten Blechen, die Dicke der zu untersuchenden Objekte in einem weiten Bereich variieren kann, wie beispielsweise von 0,01 mm bis zu mehreren Zentimetern. Ist dabei die geometrische Ausdehnung relativ zur Dicke der Objekte groß oder in einer Richtung sogar annäherungsweise unendlich, wie beispielsweise bei auf Rollen aufgewickelten Materialien wie Folien, Papier oder Blechen, besteht das Problem, dass die Dicke einer großen Fläche des Objekts mit einer einzigen Messung bestimmt werden muss, um die gesamte Messdauer auf einem akzeptablen Niveau zu halten. Zusätzlich ergibt sich das Problem, dass gerade bei den Materialien, die in Form von Bahnen produziert werden, der Anspruch an die Toleranz der Dicke der Bahn typischerweise besonders groß ist. Beispielsweise werden im Automobilbau die Blechstärken teilweise mit äußerst geringen Toleranzen spezifiziert, da die Einhaltung der Blechstärke für das Crash-Verhalten der fertig montierten Fahrzeuge wesentlich ist. Bei der Kontrolle von Blechdicken ist darüber hinaus zu beachten, dass Bleche in Walzwerken typischerweise in hoher Geschwindigkeit produziert werden, so dass pro Zeiteinheit eine große Blechfläche überprüft werden muss. Unter anderem kommen auch industrielle Walzmaschinen zum Einsatz, die Bleche mit einer Breite von bis zu 3 Metern erzeugen können. Darüber hinaus besteht ein Blech aus einem für herkömmliche optische Strahlung undurchlässigen Material, was die Messung der Blechstärke zusätzlich erschwert. Taktile Verfahren, die ortsaufgelöst durch direkte Berührung der Blechoberflächen deren Dicke bestimmen können, kommen für einen solchen Einsatz kaum in Frage, da diese eine Vielzahl von Messpunkten mechanisch erfassen müssten, was den Aufwand und somit die Kosten für die Qualitätskontrolle erheblich erhöhen würde. Bei industriellen Herstellungsverfahren werden Bleche oftmals so schnell erzeugt, dass diese am Ausgang einer Walzvorrichtung mit so hoher Geschwindigkeit austreten, dass diese Bleche in einer Richtung senkrecht zur Oberfläche Schwingungen durchführen. In solchen Fällen ist die Anwendung taktiler Verfahren prinzipiell nicht möglich. Ähnliche Überlegungen treffen neben Blechen für eine Vielzahl anderer ebener Materialien zu, wie beispielsweise Folien, Papier, Gläser oder ähnlichem, für die die Einhaltung einer spezifischen Materialstärke mit hoher Genauigkeit gefordert wird.

Aufgrund der oben skizzierten Probleme ist die Überwachung der Wandstärke während der Produktion äußerst aufwändig, bei Blechen erfolgt sie in der Regel radiometrisch, d. h. unter Verwendung von radioaktiven Quellen oder Röntgenröhren um Röntgenstrahlung zu erzeugen und auf radioaktive Strahlen bzw. auf Röntgenstrahlen sensitiven Detektoren. Dabei wird das zu prüfende Material mit Röntgenstrahlung oder Gamma-Strahlung durchleuchtet und die Wandstärke des durchleuchteten Materials wird durch die Strahlschwächung, die durch die Absorption der Strahlung im zu überprüfenden Material hervorgerufen wird, bestimmt. Dazu muss die Strahlintensität bzw. die ursprüngliche Strahlungsintensität bekannt sein und die nach dem Durchleuchten des Materials verbleibende Strahlungsintensität muss mittels geeigneter Detektoren nachgewiesen werden. Strahlungsempfindliche Detektoren sind im Allgemeinen äußerst aufwändige Apparate. Beispielsweise werden momentan üblicherweise Zählrohre eingesetzt, also Gas gefüllte, mit Hochspannung beaufschlagte Detektorrohre, da diese relativ langzeitstabil sind und eine geringe Drift (beispielsweise temperaturinduziert) aufweisen. Bei der Überwachung der Produktion von breiten Blechen, müssen teilweise bis zu 100 solcher Detektoren und gegebenenfalls mehrere Röntgenquellen eingesetzt werden, um über die gesamte Breite der bis zu 3 m breiten Bleche die erforderliche Ortsauflösung bzw. Empfindlichkeit der Dickenmessung zu erreichen. Dabei liegen realistisch erzielbare Messgenauigkeiten im Bereich von 0,1 % der Wandstärke, somit bei beispielsweise 10 mm dicken Blechen etwa bei 10 µm. Ein evidenter Nachteil besteht dabei in den hohen Kosten, die eine solche Messapparatur mit sich bringt. Beispielsweise muss für jedes der Zählrohre einen Hochspannungskanal einer Hochspannungsversorgung und ein Auslese- bzw. Auswertkanal einer Signalverarbeitungselektronik bereitgehalten werden.

Ein weiterer Nachteil besteht darin, dass die erzielbare Messgenauigkeit durch die Statistik der Röntgenstrahlung (Poisson-Statistik) bestimmt wird. Der Signal-Rausch-Abstand wird daher durch die Quadratwurzel der detektierten Röntgenquanten bestimmt. Bei gegebener zur Verfügung stehender Messzeit ist daher die Ortsauflösung bzw. die Dickenempfindlichkeit begrenzt. Obwohl prinzipiell die Messgenauigkeit durch längere Messdauer bzw. Integrationszeit erhöht werden kann, ist dies im industriellen Maßstab nicht beliebig möglich, da in endlicher Zeit das aus einer Produktionsstraße kommende Material überprüft werden muss. Die prinzipiell auch mögliche Erhöhung der Aktivität der verwendeten Röntgenquellen erhöht auch das Risiko bei einem Strahlungsunfall und kann somit nur bedingt dazu beitragen, die Geschwindigkeit der Messung bzw. die erzielbare Messgenauigkeit zu steigern.

Für den Einsatz in Verbindung mit ausgedehnten Materialien, wie beispielsweise Blech-Rollen ist darüber hinaus das Röntgenverfahren deswegen nur bedingt geeignet, da die typischen Detektoren (Zählrohre) die kommerziell erhältlich sind, eine Ausdehnung von lediglich einigen Zentimetern aufweisen, so dass, wie bereits oben erwähnt, eine Vielzahl solcher Detektoren verwendet werden muss. Zusätzlich wird die erzielbare Ortsauflösung durch die endliche Ausdehnung der Zählrohre stark begrenzt, da ein einzelnes Zählrohr jeweils nur die Existenz eines Gamma-Quants in der von ihm überdeckten Fläche nachweisen kann, wobei eine weitere Differenzierung des Ortes des Gamma-Quants innerhalb des Zählrohrs nicht möglich ist.

Die dem Stand der Technik entsprechenden Röntgenverfahren haben also den Nachteil, nur eine begrenzte Ortsauflösung erzielen zu können, sowie Detektoren zu verwenden, deren Anschaffung und Betrieb äußerst aufwändig und kostenintensiv ist.

Die internationale Patentanmeldung WO 91/08439 beschreibt ein Lichtschnittmessverfahren, mit dem die Oberflächenkontur ausgedehnter drei-dimensionaler Objekte bestimmt werden kann. Um die Messgenauigkeit zu erhöhen, schlägt die WO 91/ 08439 vor, in zyklischen Abständen ein Eichobjekt vorbekannter geometrischer Ausdehnung mit dem Lichtschnittmess-Sensor bzw. dem Lichtschnittmess-System zu vermessen, um so eine Kalibrierung des Systems durchzuführen.

Die US Anmeldung 4,564,296 beschreibt ein Verfahren zum Bestimmen der Dicke einer Platte, bei dem ein optisches Testmuster auf die Oberfläche der zu vermessenden Platte projiziert wird. Um den Abstand zwischen zwei, auf unterschiedlichen Seiten des zu vermessenden Objekts angeordneten Optiken und den ihnen jeweils zugeordneten Oberflächen des Objekts zu bestimmen, wird auf die Oberfläche des Objekts ein Testmuster projiziert. Der Abstand wird dadurch bestimmt, dass die Optik so lange verschoben bzw. variiert wird, dass das projizierte Testmuster auf der Oberfläche des Objekts maximale Schärfe erreicht. Ferner ist auf dem Objektträger, der das zu vermessende Objekt mechanisch haltert, ein Bereich mit einer Referenzdicke vorhanden.

Die Aufgabe der vorliegenden Erfindung besteht daher darin, eine Vorrichtung und ein Verfahren zu schaffen, mit dem die Bestimmung der Materialstärke eines Objekts mit höherer Ortsauflösung und effizienter als bisher möglich ist.

Diese Aufgabe wird durch eine Vorrichtung gemäß Patentanspruch 1 und durch ein Verfahren gemäß Patentanspruch 13 gelöst.

Der vorliegenden Erfindung liegt dabei die Erkenntnis zugrunde, dass die Materialstärke ausgedehnter Objekte dadurch effizient bestimmt werden kann, dass zwei Lichtschnittmesseinrichtungen verwendet werden, wobei eine erste Lichtschnittmesseinrichtung den Abstand zu einer ersten Hauptoberfläche des Objekts und eine zweite Lichtschnittmesseinrichtung den Abstand zu einer zweiten Hauptoberfläche des Objektes, die der ersten Hauptoberfläche gegenüberliegt, bestimmt. Werden potentielle Messfehler aufgrund der ausgedehnten Geometrie dadurch vermieden, dass eine Referenzeinrichtung einen Referenzabstand zwischen der ersten Abstandsmesseinrichtung und der zweiten Abstandsmesseinrichtung bestimmt, kann mit hoher Genauigkeit und Geschwindigkeit die Dicke des Objekts zwischen der ersten Hauptoberfläche und der zweiten Hauptoberfläche bestimmt werden.

Dabei kommen bevorzugt Lichtschnittmesseinrichtungen zum Einsatz, die mittels einer einzigen Messung den Abstand zu einem ausgedehnten Bereich auf der Oberfläche des Objekts bestimmen können.

In anderen Worten besteht der Grundgedanke der Erfindung also darin, die Dicke eines Bahnmaterials dadurch zu bestimmen, dass der Abstand von Ober- und Unterseite des Bahnmaterials zu einem über bzw. unter dem Bahnmaterial angebrachten Detektor bestimmt wird, der beispielsweise eine linienförmige Messung des Abstands ermöglicht. Verwendet wird hierfür das Lichtschnittverfahren. Das Problem der Oberflächenvermessung ausgedehnter Objekte besteht generell darin, dass aufgrund der Ausdehnung (beispielsweise der großen Breiten von Bahnmaterialien) ein mechanischer Aufbau zur Aufhängung der Detektoren über und unter dem Objekt (Bahnmaterial) erforderlich ist. Aufgrund der großen geometrischen Ausdehnung kann nicht sichergestellt werden, dass Vibrationen oder thermische Deformationen das Messergebnis nicht verfälschen, insbesondere, da hochpräzise Messungen im Bereich einiger Mikrometer durchgeführt werden sollen. Solche Vibrationen oder Deformationen könnten daher zu einem Messfehler außerhalb der üblicherweise geforderten Toleranzen führen. Erfindungsgemäß wird diesem Problem dadurch begegnet, dass eine Referenzeinrichtung zum Bestimmen eines Referenzabstands zwischen der ersten Abstandsmesseinrichtung und der zweiten Abstandsmesseinrichtung verwendet wird. Dadurch wird eine etwaige Veränderung des Abstands der beiden Detektoreinrichtungen ober- bzw. unterhalb des Bahnmaterials vermieden.

Bei der vorliegenden Erfindung wird daher eine erste Lichtschnittmesseinrichtung eingesetzt, um einen ersten Abstand zwischen der ersten Lichtschnittmesseinrichtung und einer ersten Hauptoberfläche eines zu vermessenden Bahnmaterials zu bestimmen. Eine zweite Lichtschnittmesseinrichtung wird verwendet, um einen zweiten Abstand von der zweiten Lichtschnittmesseinrichtung zu einer zweiten, der ersten Hauptoberfläche des Bahnmaterials gegenüberliegenden Hauptoberfläche des Bahnmaterials zu bestimmen. Mittels einer Referenzeinrichtung wird zusätzlich als Referenzabstand der Abstand der ersten Lichtschnittmesseinrichtung von der zweiten Lichtschnittmesseinrichtung in Messrichtung bestimmt. Die Messrichtung ist dabei diejenige Richtung, die zur Dicke des Objekts parallel verläuft, also senkrecht auf den Hauptoberflächen steht.

Dazu wird bei der vorliegenden Erfindung auf einer oder auf beiden Seiten des zu vermessenden Bahnmaterials bzw. Objekts ein Referenzobjekt vorbestimmter, bekannter Dicke angebracht, so dass dieses zusätzlich von beiden Lichtschnittmesseinrichtungen zusammen mit der Oberfläche des zu vermessenden Objekts vermessen wird. Die Lichtschnittmesseinrichtungen müssen also so angeordnet sein, dass ein Teil der von den Lichtschnittmesseinrichtungen auf der Oberfläche des Objekts erzeugten Messlichtstreifen auf den den Lichtschnittmesseinrichtungen zugewandten Oberflächen der Referenzobjekte abgebildet werden.

Die Bestimmung des Referenzabstands erfolgt dadurch, dass der Abstand der ersten und der zweiten Lichtschnittmesseinrichtung zu den ihnen zugewandten Oberflächen des Referenzobjekts gleichzeitig mit dem Abstand zum zu vermessenden Objekt bestimmt wird. Da die Dicke des Referenzobjekts exakt bekannt ist, kann als Referenzabstand der Abstand zwischen der ersten Lichtschnittmesseinrichtung und der zweiten Lichtschnittmesseinrichtung einfach berechnet werden. Erfindungsgemäß wird daher oft ein Material für die Referenzobjekte verwendet, das einer geringen thermischen Ausdehnung unterliegt.

Sofern es geometrisch möglich ist, entsprechende Referenzobjekte gleichzeitig mit dem zu untersuchenden Objekt von den Lichtschnittmesseinrichtungen aufnehmen zu lassen, kann durch einfaches Einbringen kostengünstiger Referenzobjekte die Einhaltung der Messgenauigkeit sichergestellt werden. Die Verwendung von kostspieligen Röntgendetektoren kann somit vollständig entfallen.

Bei einem weiteren Ausführungsbeispiel der vorliegenden Erfindung wird die erzielbare Messgenauigkeit dadurch zusätzlich erhöht, dass auf beiden Seiten eines zu untersuchenden Bahnmaterials Referenzobjekte angebracht werden.

Gemäß einem Ausführungsbeispiel der vorliegenden Erfindung wird die Messeinrichtung dazu verwendet, die Dicken von Blechen, die von einer Presse produziert werden, unmittelbar nach der Produktion zu überprüfen. Dazu werden die Bleche in einer Vorschubrichtung zwischen der ersten Lichtschnittmesseinrichtung und der zweiten Lichtschnittmesseinrichtung bewegt.

Der große Vorteil des Verwendens von berührungslosen Lichtschnittmesseinrichtungen liegt dabei darin, dass mittels einer einzigen Messung der Abstand des Bahnmaterials bzw. der Blechbahn zum Messkopf über eine Breite von mehr als 1 m linienförmig erfasst werden kann. Das heißt, mittels nur einer einzigen Messung kann ein Höhenprofil senkrecht zur Vorschubrichtung gewonnen werden, das mehr als 1 m Materialbreite beschreibt. Dabei ist zusätzlich die Ortsauflösung im Vergleich zu Strahlungsdetektoren dadurch stark erhöht, dass die die Auflösung in Vorschubrichtung begrenzende geometrische Ausdehnung des projizierten Lichtstreifens in Vorschubrichtung prinzipiell beliebig klein gemacht werden kann. Durch Variation der Vorschubgeschwindigkeit des aus der Presse kommenden Blechmaterials lässt sich somit die Ortsauflösung der Topographie-Information, also der Höheninformation auf der Oberfläche des zu untersuchenden Materials bzw. des Dickenprofils, beliebig variieren.

Zusammenfassend kann also gesagt werden, dass das erfindungsgemäße Verfahren bzw. die erfindungsgemäße Vorrichtung das Potential besitzt, eine höhere Ortsauflösung zu erreichen und insgesamt die Messgeschwindigkeit zu erhöhen, wobei gleichzeitig die Kosten der verwendeten Detektoren gegenüber dem Stand der Technik deutlich gesenkt werden können. Dies wird dadurch erreicht, dass radiometrische Detektoren ganz durch andere Messsysteme ersetzt werden, die Abstände auf einer Linie oder in einem ausgedehnten geometrischen Bereich ermitteln können, wie beispielsweise Lichtschnittverfahren.

Bevorzugte Ausführungsbeispiele der vorliegenden Erfindung werden nachfolgend, Bezug nehmend auf die beiliegenden Zeichnungen, näher erläutert. Es zeigen:
- Fig. 1: ein Ausführungsbeispiel der vorliegenden Erfin- dung mit Referenzobjekten zur Bestimmung des Re- ferenzabstands;
- Fig. 2A und 2B: ein weiteres Ausführungsbeispiel der vorliegenden Erfindung mit mehreren Lichtschnittmesseinrich- tungen;
- Fig. 3: ein Ausführungsbeispiel eines erfindungsgemäßen Verfahrens zur Bestimmung der Materialstärke ei- nes Objekts; und
- Fig. 4: ein Vergleichsbeispiel eines Lichtschnittmessver- fahrens.

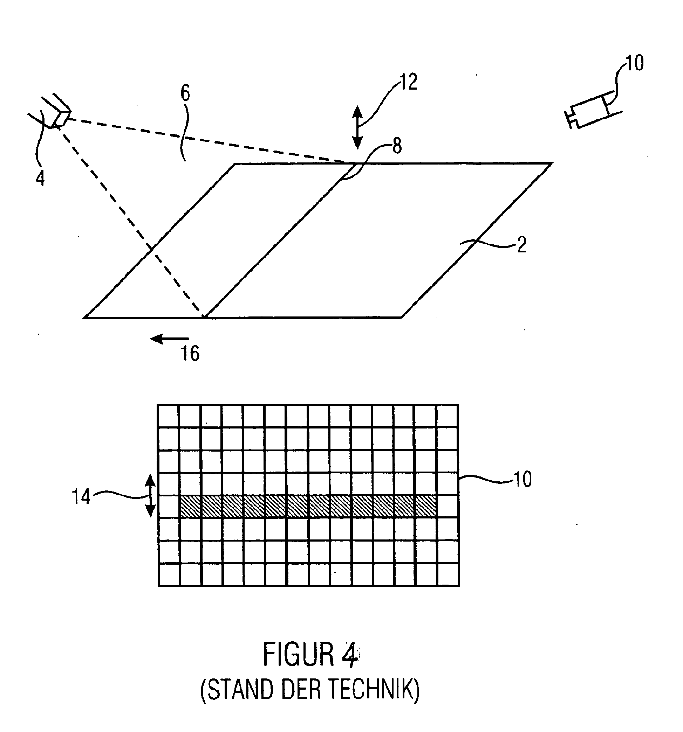

Da in den folgenden Absätzen das erfindungsgemäße Konzept unter Verwendung von Lichtschnittmesseinrichtungen beschrieben wird, soll anhand von Fig. 4 kurz das Lichtschnittmessverfahren an einem einfachen Beispiel beschrieben werden.

Fig. 4 zeigt dabei die Oberfläche eines zu vermessenden Objekts 2, einen Messlichtprojektors 4, welcher in eine Lichtebene 6 Licht emittiert, so dass auf der Oberfläche des Objekts 2 ein Messlichtstreifen 8 erzeugt wird. Im in Fig. 5 vereinfacht gezeigten Fall einer perfekt ebenen Oberfläche 2 ist der Messlichtstreifen 8 die in Fig. 4 gezeigte Gerade.

Der Messlichtstreifen 8 wird mittels eines geeigneten Sensors 10 aufgezeichnet. Im in Fig. 4 gezeigten Beispiel ist der Sensor 10 ein zwei-dimensionaler Matrixsensor, wie beispielsweise eine CCD- oder ein CMOS-Sensor. Die genaue Art des Sensors ist für die Funktionsweise des erfindungsgemäßen Konzeptes nicht erheblich, es können generell auch andere Arten von Sensoren verwendet werden.

Wird auf der Oberfläche 2 des Objekts eine Messlichtlinie 8 als Gerade erzeugt, wird das Bild der Geraden, wie in Fig. 5 gezeigt, auf dem Sensor 10 abgebildet. Die Höheninformation ergibt sich nunmehr aus der Geometrie des Gesamtaufbaus, insbesondere aus der Relativposition des Sensors 10 und des Messlichtprojektors 4. Wird beispielsweise die Oberfläche 2 des Objekts in einer Richtung 12 bewegt, wird der Messlichtstreifen an anderer Position auf der Oberfläche 2 des Objekts erzeugt, da die Lichtebene 6 im Raum unverändert bleibt. Da auch der Sensor 10 ortsfest ist, wird auch das Bild der Messlichtlinie (symbolisiert durch schwarze Quadrate) auf dem Sensor in einer Richtung 14 variieren. Bei Kenntnis der Geometrie der Lichtebene 6 und des Sensors 10 kann also, wie oben beschrieben, auf die Position der Oberfläche 2 des Objekts in Richtung 12 geschlossen werden.

Äquivalente Überlegungen gelten, wenn die Oberfläche des Objekts nicht eben ist. Mittels des in Fig. 4 gezeigten Lichtschnittverfahrens kann somit Topographie-Information bzw. Höheninformation über die gesamte Breite der Oberfläche 2 mittels einer einzigen Aufnahme des Sensors 10 bestimmt werden.

Es werden für Lichtschnittmessverfahren spezialisierte Sensoren 10 verwendet, die in hoher Geschwindigkeit selbst eine Signalverarbeitung durchführen können, so dass diese beispielsweise lediglich die Information über den hellsten belichteten Pixel des Sensors 10 als Messergebnis zur Verfügung stellen. Solche hoch-spezialisierten Sensoren eignen sich daher insbesondere für eine schnelle Messung, da aufwändige Signalnachverarbeitung, wie sie beispielsweise bei einer herkömmlichen CCD erforderlich wird, vermieden werden kann.

Zusammenfassend weisen Lichtschnittmessverfahren also den erheblichen Vorteil auf, dass mit hoher Geschwindigkeit die Höheninformation entlang einer räumlich ausgedehnten Messlinie 8 erhalten werden kann.

Wird die Oberfläche 2 in einer Richtung senkrecht zur Messlichtlinie 8 und in einer Richtung 16 unter der Lichtebene bewegt und werden sukzessive Aufnahmen mittels des Sensors 10 durchgeführt, kann innerhalb kurzer Zeit die gesamte Topographie der Oberfläche 2 des zu untersuchenden Objekts bestimmt werden, was das Lichtschnittmessverfahren für den Einsatz bei der Vermessung räumlich ausgedehnter Oberflächen prädestiniert.

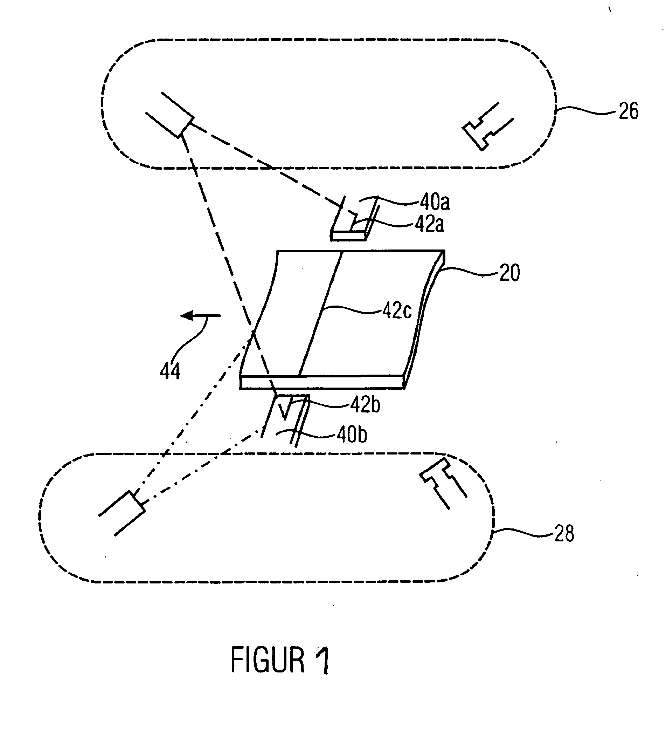

Fig. 1 zeigt ein weiteres Ausführungsbeispiel der vorliegenden Erfindung, bei dem der Referenzabstand mittels optischer Messung bestimmt wird.

In Fig. 1 und in den drei folgenden Figuren sind funktionsähnliche bzw. funktionsidentische Komponenten mit den selben Bezugszeichen versehen, so dass die Beschreibung der einzelnen Komponenten wechselseitig auf unterschiedliche Figuren anwendbar ist. Darüber hinaus können mit identischen Bezugszeichen versehene Objekte innerhalb der einzelnen im Folgenden beschriebenen Ausführungsbeispiele alternativ verwendet werden.

Fig. 1 zeigt als erste Abstandsmesseinrichtung 26 eine Lichtschnittmesseinrichtung, wie sie anhand von Fig. 4 bereits beschrieben wurde. Als zweite Abstandsmesseinrichtung 28 wird ebenfalls eine Lichtschnittmesseinrichtung verwendet. Fig. 1 zeigt darüber hinaus in einer perspektivischen Ansicht das zu vermessende Objekt 20, sowie ein erstes Referenzobjekt 40a und ein zweites Referenzobjekt 40b. Die Referenzobjekte 40a und 40b weisen jeweils eine erste Referenzhauptoberfläche auf, die der ersten Abstandsmesseinrichtung 26 bzw. der ersten Lichtschnittmesseinrichtung 26 zugewandt ist. Eine zweite Hauptoberfläche der Referenzobjekte 40a und 40b ist der zweiten Abstandsmesseinrichtung 28 bzw. der zweiten Lichtschnittmesseinrichtung 28 zugewandt. Die Referenzobjekte 40a und 40b zeichnen sich darüber hinaus dadurch aus, dass diese zwischen den Referenzhauptoberflächen eine präzise vorbestimmte Dicke aufweisen. Bevorzugt sind die Referenzobjekte 40a und 40b darüber hinaus aus Materialien hergestellt, die einer geringen thermischen Ausdehnung unterliegen.

Wie es in Fig. 1 zu sehen ist, ist die geometrische Anordnung der Lichtschnittmesseinrichtungen 26 und 28 bzw. der Referenzobjekte 40a und 40b so gewählt, dass Teile 42a und 42b des von der ersten Lichtschnittmesseinrichtung 26 erzeugten Messlichtstreifens auf den Referenzobjekten 40a und 40b erzeugt werden. Gleiches gilt für Lichtschnittmesseinrichtung 28, wobei aufgrund der teil-perspektivischen Ansicht in Fig. 1 die auf den zweiten Hauptoberflächen der Referenzobjekte 40a und 40b erzeugten Lichtmessstreifen in Fig. 1 nicht zu sehen sind.

Im in Fig. 1 gezeigten Ausführungsbeispiel umfasst die Referenzeinrichtung zum Bestimmen eines Referenzabstands zwischen der ersten Lichtschnittmesseinrichtung 26 und der zweiten Lichtschnittmesseinrichtung 28 also zwei Referenzobjekte 40a und 40b.

Da die Dicke der Referenzobjekte 40a und 40b genau bekannt ist und die Abstände zu den Referenzobjekten 40a und 40b im laufenden Betrieb der erfindungsgemäßen Messeinrichtung von Fig. 1 jeweils mit ermittelt werden, kann als Referenzabstand beispielsweise der Abstand zwischen der ersten Lichtschnittmesseinrichtung 26 und der zweiten Lichtschnittmesseinrichtung 28 durch Verknüpfung der Abstände der Lichtschnittmesseinrichtung 26 zur ersten Hauptoberfläche der Referenzobjekte 40a und 40b, der Dicke der Referenzobjekte 40a und 40b sowie der Abstände der zweiten Lichtschnittmesseinrichtung 28 zur zweiten Hauptoberfläche der Referenzobjekte 40a und 40b bestimmt werden. Alternativ kann auch die Differenz der tatsächlichen Dicke der Referenzobjekte von der mittels den Lichtschnittmesseinrichtungen bestimmten Dicke als Referenzgröße verwendet werden. Mittels der Differenz könnten dann die Dickenwerte, die mittels der Lichtschnittmesseinrichtungen bestimmt werden, über die gesamte Breite der Messlichtstreifen korrigiert werden.

Obwohl die Verwendung von zwei Referenzobjekten 40a und 40b im in Fig. 1 gezeigten Ausführungsbeispiel die erzielbare Messgenauigkeit gegenüber dem Verwenden eines einzigen Referenzobjekts zusätzlich erhöht, kann in einem weiteren Ausführungsbeispiel der vorliegenden Erfindung lediglich ein Referenzobjekt verwendet werden, um erfindungsgemäß einen Referenzabstand zu bestimmen.

Mit anderen Worten zeigt Fig. 1 eine weitere Möglichkeit, eine Referenzmessung zu erhalten, die sich ergibt, wenn die Bahnbreite bzw. die Breite des zu vermessenden Objekts 20 geringer ist als der Erfassungsbereich verwendeter Lichtschnittvorrichtungen. In diesem Fall können rechts und links vom Bahnmaterial 20 Referenzobjekte 40a und 40b, beispielsweise in Form von Blechstreifen bekannter Dicke, unter einem bekannten Winkel (vorzugsweise wie in Fig. 1 gezeigt horizontal) angeordnet werden. Durch Vergleich der aus der Messung mit den Lichtschnittmessköpfen ermittelten Dicke dieser Blechstreifen mit der bekannten Dicke können Korrekturwerte ermittelt werden, die zur Korrektur der Messdaten für das Bahnmaterial herangezogen werden. Auch eine eventuelle Verkippung der Lichtschnittmesseinrichtungen 26 bzw. 28 senkrecht zu einer Vorschubrichtung 44 kann mittels der Vermessung der Referenzobjekte ermittelt und korrigiert werden.

Bei einem Ausführungsbeispiel der vorliegenden Erfindung wird als Messlichtstreifen ein Lichtstreifen monochromatischen Lichts, beispielsweise Licht, das durch einen Laser erzeugt wird, verwendet. Um auf den Oberflächen der statischen Referenzobjekte 40a und 40b die Bildung von Speckle-Mustern zu verhindern, können die Referenzobjekte (Bleche) so schnell in vertikaler (oder horizontaler) Richtung bewegt bzw. in Vibration versetzt werden, dass Speckle während einer Lichtschnittmessung, die typisch mehrere Hundert Mikrosekunden dauert, herausgemittelt werden. Da für die Auswertung bzw. Berücksichtigung der Dicke und die Errechnung des Referenzabstands lediglich die Differenz des Abstands von Ober- und Unterseite des Bahnmaterials zur jeweiligen Lichtschnittmesseinrichtung bzw. zum jeweiligen Messkopf herangezogen wird, ist die vertikale Position der Vergleichsbleche unerheblich. Ist dass Blech, wie bevorzugt, an jeder Stelle gleich dick, gilt dies auch für die horizontale Position, was erfindungsgemäß auf einfache Art und Weise, die Unterdrückung von Speckle-Mustern ermöglicht. Dies hat den großen Vorteil, dass erfindungsgemäß Laserlicht verwendet werden kann, welches aufgrund seiner geringen Divergenz die Bildung "dünnerer" Messlichtstreifen ermöglicht. Dies erhöht zusätzlich die erzielbare Ortsauflösung des erfindungsgemäßen Verfahrens.

Alternativ zur Verwendung von Laserlicht kann eine Weißlichtquelle zur Projektion einer Lichtlinie herangezogen werden, wobei die Referenzobjekte dann statisch angeordnet sein können.

Werden Lichtschnittmesseinrichtungen verwendet, kann die Vorschubgeschwindigkeit des Objekts 20 in der Vorschubrichtung 44 äußerst hoch gewählt werden, da Lichtschnittmesseinrichtungen hohe Messfrequenzen erlauben. Dadurch wird der Durchsatz gegenüber Röntgenverfahren stark erhöht. Eine hohe Vorschubgeschwindigkeit in Vorschubrichtung 44 verhindert zudem die Bildung von Speckle-Mustern auf der Oberfläche des Objektes, da diese sich dann während der Messdauer einer Messphase der Lichtschnittmesseinrichtungen herausmitteln. Die hohe mögliche Messfrequenz von Lichtschnittmessverfahren erlaubt es also Lichtmessstreifen mittels Laser zu projizieren, und sich eine daraus resultierende Erhöhung der Ortsauflösung zu Nutze zu machen.

Darüber hinaus kann durch Mittelung des Messsignals über mehrere Spuren des Sensors und durch zeitliche Filterung der Messdaten eine weitere Verbesserung der Genauigkeit der Dickenbestimmung erreicht werden, wenn Lichtschnittmessvorrichtungen verwendet werden. Dies ist möglich, da Lichtschnittsensoren selbst bei 1,5 m Breite des Lichtschnittmessstreifens eine Auflösung von 1 mm senkrecht zur Vorschubrichtung erlauben und die Messfrequenz von Lichtschnittsensoren wesentlich höher als die typischerweise erforderliche Zeitauflösung ist.

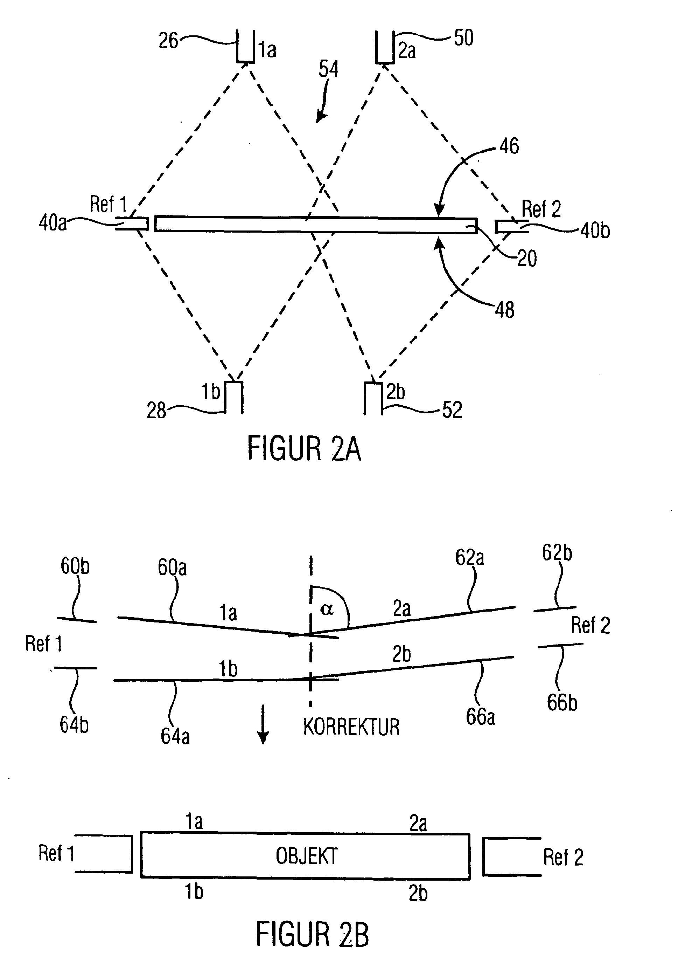

Die Fig. 2A und 2B zeigen ein weiteres Ausführungsbeispiel der vorliegenden Erfindung, bei dem das Objekt 20 räumlich so ausgedehnt ist, dass je Seite des Objekts zwei Lichtschnittmesseinrichtungen erforderlich sind, um Abstandsinformationen über die gesamte Breite des Objekts zu bestimmen. Daher sind zusätzlich zu der Lichtschnittmesseinrichtung 26, die einer ersten Hauptoberfläche 46 des Objekts 20 zugewandt ist und zu der zweiten Lichtschnittmesseinrichtung 28, die einer zweiten Hauptoberfläche 48 des Objekts 20 zugeordnet ist, eine dritte Lichtschnittmesseinrichtung 50 (2a) und eine vierte Lichtschnittmesseinrichtung 52 (2b) vorgesehen. Die dritte Lichtschnittmesseinrichtung 50 ist dabei der ersten Hauptoberfläche 46 und die vierte Lichtschnittmesseinrichtung 52 ist der zweiten Hauptoberfläche 48 zugewandt. Die Lichtebenen der ersten Lichtschnittmesseinrichtung 26 und der dritten Lichtschnittmesseinrichtung 50 sind durch die Geometrie der Anordnung derart festgelegt, dass diese sich in einem zentralen Überlappbereich 54 überschneiden. Darüber hinaus erzeugt die erste Lichtschnittmesseinrichtung 26 auf der Oberfläche des ersten Referenzobjekts 40a einen Messlichtstreifen und die dritte Lichtschnittmesseinrichtung 50 erzeugt auf der Oberfläche des zweiten Referenzobjekts 40b einen Messlichtstreifen. Gleiches gilt spiegelverkehrt für die zweite Lichtschnittmesseinrichtung 28 und die vierte Lichtschnittmesseinrichtung 52. Die Lichtebenen der zweiten Lichtschnittmesseinrichtung 28 und der vierten Lichtschnittmesseinrichtung 52 überlappen also ebenfalls innerhalb des zentralen Bereichs 54, die zweite Lichtschnittmesseinrichtung 28 erzeugt einen Messlichtstreifen auf dem ersten Referenzobjekt 40a und die vierte Lichtschnittmesseinrichtung 52 erzeugt einen Messlichtstreifen auf dem zweiten Referenzobjekt 40b.

Zur Unterscheidung der unterschiedlichen Messlichtstreifen im Überlappbereich, der von zwei Lichtschnittmesseinrichtungen gleichzeitig beobachtet wird, können beispielsweise unterschiedliche Lichtwellenlängen mit korrespondierenden Wellenlängenfiltern verwendet werden. Prinzipiell sind auch andere Methoden denkbar, beispielsweise eine Feinstrukturierung der unterschiedlichen Messlichtstreifen, etwa indem der Messlichtstreifen in bestimmten Abständen unterbrochen ist, sodass eine Identifizierung über dieses Muster erreicht werden kann.

Wie im Folgenden nochmals beschrieben, ist es durch die Verwendung des erfindungsgemäßen Konzepts also möglich, die Dicke von Objekten zu bestimmen, welche eine geometrische Ausdehnung besitzen, die über die maximal mit einer einzigen Lichtschnittmesseinrichtung zugänglichen Breite hinausgeht. Anhand der Fig. 2B ist beispielhaft exemplarisch dargestellt, wie aus den Daten der vier in Fig. 2A gezeigten Lichtschnittmesseinrichtungen die Dicke des Objekts 20 über die gesamte Breite desselben bestimmt werden kann. Dabei sind in Fig. 2B zunächst für den vereinfachten Fall einer perfekt planaren Oberfläche die mittels der Sensoren der Lichtschnittmesseinrichtungen 26, 28, 50 und 52 erhaltenen Aufnahmen der Lichtmessstreifen schematisch dargestellt. Dabei sind erste Lichtschnittaufnahmensegmente 60a und 60b der ersten Lichtschnittmesseinrichtung 26, Lichtschnittaufnahmensegmente 62a und 62b der dritten Lichtschnittmesseinrichtung 50, Lichtschnittaufnahmensegmente 64a und 64b der zweiten Lichtschnittmesseinrichtung 28 und Lichtschnittaufnahmensegmente 66a und 66b der vierten Lichtschnittmesseinrichtung 52 zugeordnet. Die Lichtschnittaufnahmensegmente 60a, 62a, 64a und 66a sind also diejenigen Teile der Messlichtstreifen, die auf der Oberfläche des Objekts 20 erzeugt werden. Die Lichtschnittaufnahmensegmente 60b, 62b, 64b und 66b symbolisieren diejenigen Teile der Messlichtstreifen, die auf den Referenzobjekten 40a und 40b erzeugt werden.

Im in Fig. 2B gezeigten Fall sind die Abweichungen, die sich durch eventuelle Schrägstellung bzw. Nicht-Parallelität der einzelnen Lichtschnittmesseinrichtungen ergeben können, übertrieben dargestellt, um das erfindungsgemäße Verfahren bzw. das erfindungsgemäße Konzept deutlicher zu machen.

Um aus den in Fig. 2B stilisiert gezeichneten Messlichtaufnahmen der einzelnen Messlichtstreifen die Dicke über die gesamte Breite des Objekts 20 bestimmen zu können, werden zunächst eventuelle Verkippungen der einzelnen Messlichteinrichtungen 26, 28, 50 oder 52 korrigiert, was analog zum in Fig. 1 diskutierten Fall mittels der Referenzobjekte möglich ist. Danach werden die Ergebnisse der ersten Lichtschnittmesseinrichtung 26 mit den Ergebnissen der dritten Lichtschnittmesseinrichtung 50 abgeglichen, d. h. ein Winkel α zwischen dem Messlichtaufnahmensegment 60a und dem Messlichtaufnahmensegment 62a wird so lange variiert, bis beide Messlichtaufnahmen 60a und 62a im Überlappbereich 54 im Wesentlichen identische Werte liefern. Das heißt, eine eventuelle Nicht-Parallelität der der ersten Lichtschnittmesseinrichtung zugeordneten Lichtebene und der der dritten Lichtschnittmesseinrichtung zugeordneten Lichtebene wird korrigiert. Dies kann beispielsweise durch einen Least-Square-Fit geschehen, der die quadratischen Fehler der Einzelmessungen zum durch Anpassung erzielten Wert der Lichtschnittaufnahmen im Überlappbereich 54 minimiert. Selbiges Verfahren wird für die zweite Lichtschnittmesseinrichtung 28 und die vierte Lichtschnittmesseinrichtung 52 durchgeführt, so dass sich nach Angleichung der unterschiedlichen Messköpfe ein in Fig. 2B gezeigtes Bild ergibt. Durch Bestimmung des Referenzabstands zwischen den einzelnen Lichtschnittmesseinrichtungen unter Verwendung der zu den Referenzobjekten 40a und 40b gemessenen Abstände kann nun die Dicke des zu vermessenden Objekts 20 auf dessen Gesamtbreite bestimmt werden.

Obwohl in Fig. 2A und 2B das erfindungsgemäße Konzept unter Verwendung von lediglich zwei Lichtschnittmesseinrichtungen pro Seite des zu vermessenden Objekts illustriert ist, können erfindungsgemäße Messeinrichtungen auch mehr als zwei Lichtschnittmesseinrichtungen je Oberfläche aufweisen. Ist dies erforderlich, um die gesamte Breite des Objekts 20 abzudecken, kann ähnlich wie in Fig. 2A und 2B skizziert, vorgegangen werden. In diesem Fall wird im ersten Schritt für die beiden äußeren Messanordnungen, die jeweils ein horizontal (oder unter einem bekannten Winkel) liegendes Referenzobjekt erfassen, der Winkelfehler der Messköpfe senkrecht zur Vorschubrichtung bestimmt. Für die weiter innen liegenden Messanordnungen wird die Verkippung sukzessive von außen nach innen bestimmt, indem die Überlappbereiche zur Angleichung der Messkuren verwendet werden. Die Dicke über die gesamte Breite des Objekts 20 ergibt sich dann analog zum oben beschriebenen Verfahren durch Verwendung der bekannten Dicken der Referenzobjekte 40a und 40b.

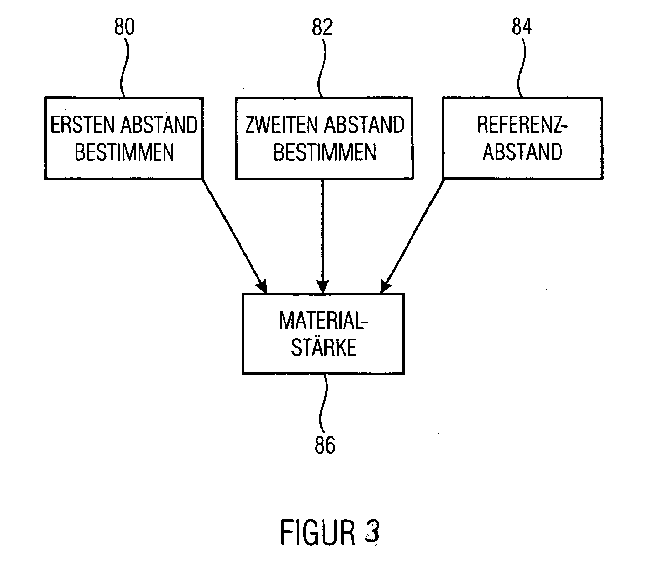

Zusammenfassend kann man also sagen, dass selbst wenn die Bahnbreite größer ist als diejenige Breite, die mit einer einzelnen Abstandsmesseinrichtung bzw. Anordnung von jeweils einem über und einem unter dem Bahnmaterial bzw. dem Objekt 20 angeordneten Lichtschnittdetektor abgedeckt werden kann, mehrere solche Anordnungen nebeneinander angeordnet werden können, um eine größere Breite abzudecken. In diesem Fall erfassen nur die äußeren Messeinrichtungen bzw. Abstandsmesseinrichtungen jeweils ein Referenzteil bzw. Referenzobjekt. überlappen sich die Messbereiche der Anordnungen ausreichend, können jedoch Relativbewegungen und eine eventuelle Verkippung der Messköpfe senkrecht zur Vorschubrichtung korrigiert werden. Da ein Lichtschnittmesskopf nur Abstände erfasst, würde eine Verkippung eines Messkopfs ohne Korrektur zu falschen Dickenwerten führen. Eine schematische Darstellung des Problems gibt, wie bereits oben beschrieben, beispielsweise Fig. 3B. Die linke Messanordnung (Lichtschnittmesseinrichtungen 26 und 28) erfasst das linke Referenzteil (Referenzobjekt 40a), die rechte Messanordnung (Lichtschnittmesseinrichtung 50 und 52) erfasst das rechte Referenzteil bzw. das rechte Referenzobjekt 40b. Eine eventuelle Verkippung der einzelnen Messköpfe senkrecht zur Vorschubrichtung, die im in Fig. 2A gezeigten Fall senkrecht zur Darstellungsebene verläuft, wird mit Hilfe der horizontal angebrachten Referenzobjekte ermittelt und korrigiert. Nach Korrektur der Winkelfehler werden die Ergebnisse der Messköpfe 1a und 2a bzw. 1b und 2b aufeinander abgeglichen, so dass beide Messköpfe im Überlappbereich weitgehend identische Werte liefern (z. B. durch Least-Square-Fit). Hierdurch entstehen durchgehende Messergebnisse für die obere bzw. untere Messanordnung.

Im letzten Schritt werden die Ergebnisse durch Vergleich mit den bekannten Dicken der Referenzobjekte abgeglichen. Nach diesem Schritt liegen für jeden Messpunkt Dickenwerte für das Bahnmaterial vor. Im in Fig. 2A und 2B gezeigten Fall wird zur vereinfachenden Darstellung angenommen, dass das Objekt 20 bzw. ein zu untersuchendes Bahnmaterial eine ebene Oberfläche aufweist. Ohne Beschränkung der Anwendbarkeit des erfindungsgemäßen Konzepts können jedoch erfindungsgemäß auch unebene Objekte vermessen werden, so beispielsweise Bleche, die in Vorschubrichtung gekrümmt sind bzw. Profilbleche, die ein dreieckiges bzw. quadratisches oder rechteckiges Profil aufweisen können.

Anhand von Fig. 3 ist ein Ausführungsbeispiel des erfindungsgemäßen Verfahrens zum Bestimmen der Materialstärke eines Objekts schematisch in Form eines Blockdiagramms dargestellt. Zur Bestimmung der Materialstärke wird dabei zunächst in einem ersten Abstandsmessschritt 80 ein erster Abstand zwischen einer Abstandsmesseinrichtung und einer ersten Hauptoberfläche des Objekts bestimmt.

In einem zweiten Abstandsmessschritt 84 wird ein zweiter Abstand zwischen einer zweiten Abstandsmesseinrichtung und einer der ersten Hauptoberfläche gegenüberliegenden zweiten Hauptoberfläche des Objekts bestimmt.

In einem dritten Schritt 84 wird eine Information über einen Referenzabstand, der eine Bestimmung einer Abweichung eines tatsächlichen Abstands zwischen der ersten Abstandsmesseinrichtung (26) und der zweiten Abstandsmesseinrichtung (28) von einem Sollabstand erlaubt, bereitgestellt.

In einem Auswerteschritt 86 wird aus dem ersten Abstand, dem zweiten Abstand und dem Referenzabstand die Materialstärke des Objekts ermittelt.

In den vorangegangenen beschriebenen Ausführungsbeispielen der vorliegenden Erfindung werden als Abstandmesseinrichtungen Lichtschnittsensoren verwendet. Obwohl in den Fig. 1 und 2A bzw. 2B Referenzobjekte mit quaderförmiger Geometrie gezeigt sind, können erfindungsgemäß Referenzobjekte beliebiger anderer Geometrien verwendet werden. Bei einem weiteren Ausführungsbeispiel der Erfindung wird ein Referenzobjekt in Form einer rotierenden Kreisscheibe verwendet. So wird zum einen erreicht, dass sich keine die Messgenauigkeit verschlechternden Speckle-Muster beim Einsatz von Lasern bilden. Darüber hinaus werden etwaige während der Produktion verursachten Unebenheiten in der Oberfläche des kreisförmigen Objekts durch die Rotation herausgemittelt, so dass insgesamt die Messgenauigkeit dadurch zusätzlich erhöht werden kann.

## Patentansprüche

1. Messvorrichtung zur Bestimmung der Materialstärke eines Objekts, mit folgenden Merkmalen:
ein Referenzobjekt (40a) einer vorbestimmten Dicke zwischen einer ersten Referenzhauptoberfläche und einer zweiten Referenzhauptoberfläche, wobei die erste Referenzhauptoberfläche einer ersten Abstandsmesseinrichtung (26) und die zweite Referenzhauptoberfläche einer zweiten Abstandsmesseinrichtung (28) zugewandt ist;
wobei die erste Abstandsmesseinrichtung (26) als Lichtschnittmesseinrichtung zum gleichzeitigen Bestimmen eines ersten Abstands (32a) zwischen der ersten Abstandsmesseinrichtung (26) und einer der ersten Abstandsmesseinrichtung zugewandten ersten Hauptoberfläche (46) des Objekts (20) sowie eines Abstands zwischen der ersten Referenzhauptoberfläche und der ersten Abstandsmesseinrichtung (26) in einer Messrichtung ausgebildet ist; und wobei
die zweite Abstandsmesseinrichtung (28) als Lichtschnittmesseinrichtung zum gleichzeitigen Bestimmen eines zweiten Abstands (32b) zwischen der zweiten Abstandsmesseinrichtung (28) und einer der ersten Hauptoberfläche (46) gegenüberliegenden zweiten Hauptoberfläche (48) des Objekts (20) sowie eines Abstands zwischen der zweiten Abstandsmesseinrichtung (28) und der zweiten Referenzhauptoberfläche in Messrichtung ausgebildet ist; und
einer Auswerteeinrichtung zum Bestimmen der Materialstärke (22) des Objekts (20) zwischen der ersten Hauptoberfläche (46) und der zweiten Hauptoberfläche (48) unter Verwendung des ersten Abstands (32a), des zweiten Abstands (32b), der vorbestimmten Dicke, des Abstands zwischen der ersten Referenzhauptoberfläche und der ersten Abstandsmesseinrichtung (26), und des Abstands zwischen der zweiten Referenzhauptoberfläche und der zweiten Abstandsmesseinrichtung (28).

2. Messvorrichtung gemäß Patentanspruch 1, bei der die erste Abstandsmesseinrichtung und die zweite Abstandsmesseinrichtung ausgebildet sind, den ersten Abstand und den zweiten Abstand berührungslos zu bestimmen.

3. Messvorrichtung gemäß Patentanspruch 1 oder 2, bei der die Messrichtung zur ersten Hauptoberfläche (46) des Objekts (20) senkrecht ist.

4. Messvorrichtung gemäß einem der vorhergehenden Patentansprüche, bei der das Referenzobjekt eine Vibration mit einer Vibrationsfrequenz ausführt, wobei die Vibrationsfrequenz mehr als das Zehnfache einer Messfrequenz der ersten Abstandsmesseinrichtung (26) oder der zweiten Abstandsmesseinrichtung (28) beträgt.

5. Messvorrichtung gemäß einem der vorhergehenden Patentansprüche, die ferner ein zweites Referenzobjekt (40b) einer vorbestimmten Dicke zwischen einer dritten Referenzhauptoberfläche und einer vierten Referenzhauptoberfläche aufweist, wobei die dritte Referenzhauptoberfläche der ersten Abstandsmesseinrichtung (26) und die vierte Referenzhauptoberfläche der zweiten Abstandsmesseinrichtung (28) zugewandt ist.

6. Messvorrichtung gemäß Patentanspruch 5, bei der das erste Referenzobjekt (40a) und das zweite Referenzobjekt (40b) in einer zur Messrichtung senkrechten Richtung auf einander gegenüberliegenden Seiten des Objekts (20) angeordnet sind.

7. Messvorrichtung gemäß einem der vorhergehenden Ansprüche, bei der die erste Abstandsmesseinrichtung eine erste Lichtschnittmesseinrichtung mit einer ersten Einrichtung zum Erzeugen eines ersten Messlichtstreifens (42a, 42b, 42c) auf der ersten Hauptoberfläche (46) des Objekts (20) umfasst; und die zweite Abstandsmesseinrichtung (28) eine zweite Lichtschnittmesseinrichtung mit einer zweiten Einrichtung zum Erzeugen eines zweiten Messlichtstreifens auf der zweiten Hauptoberfläche des Objekts (20) umfasst.

8. Messvorrichtung gemäß Patentanspruch 7, bei der die erste Einrichtung zum Erzeugen eines ersten Messlichtstreifens und die zweite Einrichtung zum Erzeugen eines zweiten Messlichtstreifens je einen Laser umfassen.

9. Messvorrichtung gemäß Patentanspruch 8, bei der die erste Einrichtung zum Erzeugen eines ersten Messlichtstreifens und die zweite Einrichtung zum Erzeugen eines zweiten Messlichtstreifens je eine Weisslichtquelle umfassen.

10. Vorrichtung gemäß einem der Patentansprüche 7 bis 9, bei der die erste Einrichtung zum Erzeugen eines ersten Messlichtstreifens und die zweite Einrichtung zum Erzeugen eines zweiten Messlichtstreifens so angeordnet sind, dass sich der erste Messlichtstreifen (42a, 42b, 42c) und der zweite Messlichtstreifen auf einander gegenüberliegenden Hauptoberflächen des Objekts (20) gegenüberliegen.

11. Messvorrichtung gemäß einem der Patentansprüche 7 bis 10, bei der die erste Abstandsmesseinrichtung (26) eine dritte Lichtschnittmesseinrichtung (50) mit einer dritten Einrichtung zum Erzeugen eines dritten Messlichtstreifens auf der ersten Hauptoberfläche des Objekts (20) umfasst; und
die zweite Abstandsmesseinrichtung (28) eine vierte Lichtschnittmesseinrichtung (52) mit einer vierten Einrichtung zum Erzeugen eines vierten Messlichtstreifens auf der zweiten Hauptoberfläche des Objekts (20) umfasst, wobei von der ersten Einrichtung zum Erzeugen eines Messlichtstreifens und von der dritten Einrichtung zum Erzeugen eines dritten Messlichtstreifens auf der ersten Hauptoberfläche des Objekts (20) erzeugte Messlichtstreifen in einem Überlappbereich auf der ersten Hauptoberfläche des Objekts räumlich überlappen; und wobei von der zweiten Einrichtung zum Erzeugen des zweiten Messlichtstreifens und von der vierten Einrichtung zum Erzeugen des vierten Messlichtstreifens auf der zweiten Hauptoberfläche des Objekts (20) erzeugte Messlichtstreifen in einem Überlappbereich auf der zweiten Hauptoberfläche des Objekts (20) räumlich überlappen.

12. Messvorrichtung gemäß Patentanspruch 11, bei der die Auswerteeinrichtung ausgebildet ist, eine Abstandsinformation der ersten und der dritten Lichtschnittmesseinrichtung im Überlappbereich aufeinander anzupassen um eine angepasste Abstandsinformation zu erhalten, so dass die erste und die dritte Lichtschnittmesseinrichtung im Überlappbereich eine Abweichung zur angepassten Abstandsinformation aufweisen, die innerhalb eines vorbestimmten Toleranzbereichs liegt.

13. Verfahren zur Bestimmung der Materialstärke eines Objekts, mit folgenden Schritten:
Bestimmen eines ersten Abstands zwischen einer als Lichtschnittmesseinrichtung ausgebildeten ersten Abstandsmesseinrichtung und einer der ersten Abstandsmesseinrichtung zugewandten ersten Hauptoberfläche des Objekts in einer zur ersten Hauptoberfläche des Objekts im Wesentlichen senkrechten Messrichtung und gleichzeitiges Bestimmen eines Abstands zwischen einer ersten Referenzhauptoberfläche eines Referenzobjekts (40a) einer vorbestimmten Dicke und der ersten Abstandsmesseinrichtung in der Messrichtung;
Bestimmen eines zweiten Abstands zwischen einer zweiten als Lichtschnittmesseinrichtung ausgebildeten Abstandsmesseinrichtung und einer der ersten Hauptoberfläche gegenüberliegenden zweiten Hauptoberfläche des Objekts in Messrichtung und gleichzeitiges Bestimmen eines Abstands zwischen einer der ersten Referenzhauptoberfläche gegenüberliegenden zweiten Referenzhauptoberfläche des Referenzobjekts (40a) und der zweiten Abstandsmesseinrichtung (28) in der Messrichtung; und
Bestimmen der Materialstärke des Objekts zwischen der ersten Hauptoberfläche und der zweiten Hauptoberfläche unter Verwendung des ersten, und des zweiten Abstands sowie der vorbestimmten Dicke, des Abstands zwischen der ersten Referenzhauptoberfläche und der ersten Abstandsmesseinrichtung (26) und des Abstands zwischen der zweiten Referenzhauptoberfläche und der zweiten Abstandsmesseinrichtung (28).

14. Verfahren gemäß Patentanspruch 13, in dem der erste Abstand, der zweite Abstand berührungslos ermittelt werden.

## Claims

1. Measuring apparatus for determining the material strength of an object, comprising:
a reference object (40a) of a predetermined thickness between a first reference main surface and a second reference main surface, wherein the first reference main surface is facing a first distance measuring means (26) and the second reference main surface is facing a second distance measuring means (28);
wherein the first distance measuring means (26) is implemented as light-slit measuring means for simultaneously determining a first distance (32a) between the first distance measuring means (26) and a first main surface (46) of the object (20) facing the first distance measuring means as well as a distance between the first reference main surface and the first distance measuring means (26) in measurement direction; and wherein
the second distance measuring means (28) is implemented as light-slit measuring means for simultaneously determining a second distance (32b) between the second distance measuring means (28) and a second main surface (48) of the object (20) opposing the first main surface (46) as well as a distance between the second distance measuring means (28) and the second reference main surface in measurement direction; and
an evaluation means for determining the material strength (22) of the object (20) between the first main surface (46) and the second main surface (48) by using the first distance (32a), the second distance (32b), the predetermined thickness, the distance between the first reference main surface and the first distance measuring means (26), and the distance between the second reference main surface and the second distance measuring means (28).

2. Measuring apparatus according to claim 1, wherein the first distance measuring means and the second distance measuring means are implemented to determine the first distance and the second distance in a contactless manner.

3. Measuring apparatus according to claim 1 or 2, wherein the measurement direction is perpendicular to the first main surface (46) of the object (20).

4. Measuring apparatus according to one of the previous claims, wherein the reference object vibrates with a vibration frequency, wherein the vibration frequency is more than ten times a measurement frequency of the first distance measuring means (26) or the second distance measuring means (28).

5. Measuring apparatus according to one of the previous claims, further comprising a second reference object (40b) of a predetermined thickness between a third reference main surface and a fourth reference main surface, wherein the third reference main surface is facing the first distance measuring means (26) and the fourth reference main surface is facing the second distance measuring means (28).

6. Measuring apparatus according to claim 5, wherein the first reference object (40a) and the second reference object (40b) are arranged on opposing sides of the object (20) in a direction perpendicular to the measurement direction.

7. Measuring apparatus according to one of the previous claims, wherein the first distance measuring means comprises a first light-slit measuring means having a first means for generating a first measuring light strip (42a, 42b, 42c) on the first main surface (46) of the object (20); and the second distance measuring means (28) comprises a second light-slit measuring means having a second means for generating a second measuring light strip on the second main surface of the object (20).

8. Measuring apparatus according to claim 7, wherein the first means for generating a first measuring light strip and the second means for generating a second measuring light strip each comprise one laser.

9. Measuring apparatus according to claim 8, wherein the first means for generating a first measuring light strip and the second means for generating a second measuring light strip each comprise one white light source.

10. Apparatus according to one of claims 7 to 9, wherein the first means for generating a first measuring light strip and the second means for generating a second measuring light strip are arranged such that the first measuring light strip (42a, 42b, 42c) and the second measuring light strip oppose on opposing main surfaces of the object (20).

11. Measuring apparatus according to one of claims 7 to 10, wherein the first distance measuring means (26) comprises a third light-slit measuring means (50) having a third means for generating a third measuring light strip on the first main surface of the object (20); and
the second distance measuring means (28) comprises a fourth light-slit measuring means (52) having a fourth means for generating a fourth measuring light strip on the second main surface of the object (20), wherein measuring light strips generated by the first means for generating a measuring light strip and by the third means for generating a third measuring light strip on the first main surface of the object (20) spatially overlap in an overlapping area on the first main surface of the object; and wherein measuring light strips generated by the second means for generating the second measuring light strip and by the fourth means for generating the fourth measuring light strip on the second main surface of the object (20) spatially overlap in an overlapping area on the second main surface of the object (20).

12. Measuring apparatus according to claim 11, wherein the evaluation means is implemented to adapt distance information of the first and third light-slit measuring means in the overlapping area to each other for obtaining adapted distance information, so that the first and third light-slit measuring means show a deviation from the adapted distance information in the overlapping area that lies within a predetermined tolerance range.

13. Method for determining the material strength of an object, comprising:
determining a first distance between a first distance measuring means implemented as light-slit measuring means and a first main surface of the object facing the first distance measuring means in a measurement direction substantially perpendicular to the first main surface of the object and
simultaneously determining a distance between a first reference main surface of a reference object (40a) of a predetermined thickness and the first distance measuring means in the measurement direction;
determining a second distance between a second distance measuring means implemented as light-slit measuring means and a second main surface of the object opposing the first main surface in measurement direction and simultaneously determining a distance between a second reference main surface of the reference object (40a) opposing the first reference main surface and the second distance measuring means (28) in the measurement direction; and
determining the material strength of the object between the first main surface and the second main surface by using the first and second distances as well as the predetermined thickness, the distance between the first reference main surface and the first distance measuring means (26) and the distance between the second reference main surface and the second distance measuring means (28).

14. Method according to claim 13, wherein the first distance, the second distance are determined in a contactless manner.

## Revendications

1. Dispositif de mesure pour déterminer l'épaisseur de matériau d'un objet, aux caractéristiques suivantes:
un objet de référence (40a) d'une épaisseur prédéterminée entre une première surface principale de référence et une deuxième surface principale de référence, la première surface principale de référence étant tournée vers un premier moyen de mesure de distance (26) et la deuxième surface principale référence vers un deuxième moyen de mesure de distance (28);
le premier moyen de mesure de distance (26) se présentant sous forme de moyen de mesure par coupe optique destiné à déterminer simultanément une première distance (32a) entre le premier moyen de mesure de distance (26) et une première surface principale (46) de l'objet (20) tournée vers le premier moyen de mesure de distance ainsi qu'une distance entre la première surface principale de référence et le premier moyen de mesure de distance (26) dans une direction de mesure; et
le deuxième moyen de mesure de distance (28) se présentant sous forme de moyen de mesure par coupe optique destiné à déterminer simultanément une deuxième distance (32b) entre le deuxième moyen de mesure de distance (28) et une deuxième surface principale (48) de l'objet (20) opposée à la première surface principale (46) ainsi qu'une distance entre le deuxième moyen de mesure de distance (28) et la deuxième surface principale de référence dans la direction de mesure; et
un moyen d'évaluation destiné à déterminer l'épaisseur de matériau (22) de l'objet (20) entre la première surface principale (46) et la deuxième surface principale (48) à l'aide de la première distance (32a), de la deuxième distance (32b), de l'épaisseur prédéterminée, de la distance entre la première surface principale de référence et le premier moyen de mesure de distance (26), et la distance entre la deuxième surface principale de référence et le deuxième moyen de mesure de distance (28).

2. Dispositif de mesure selon la revendication 1, dans lequel le premier moyen de mesure de distance et le deuxième moyen de mesure de distance sont réalisés de manière à déterminer la première distance et la deuxième distance sans contact.

3. Dispositif de mesure selon la revendication 1 ou 2, dans lequel le moyen de mesure est perpendiculaire à la première surface principale (46) de l'objet (20).

4. Dispositif de mesure selon l'une des revendications précédentes, dans lequel l'objet de référence effectue une vibration à une fréquence de vibration, la fréquence de vibration étant de plus de dix fois une fréquence de mesure du premier moyen de mesure de distance (26) ou du deuxième moyen de mesure de distance (28).

5. Dispositif de mesure selon l'une des revendications précédentes, présentant par ailleurs un deuxième objet de référence (40b) d'une épaisseur prédéterminée entre une troisième surface principale de référence et une quatrième surface principale de référence, la troisième surface principale de référence étant tournée vers le premier moyen de mesure de distance (26) et la quatrième surface principale de référence vers le deuxième moyen de mesure de distance (28).

6. Dispositif de mesure selon la revendication 5, dans lequel le premier objet de référence (40a) et le deuxième objet de référence (40b) sont disposés dans une direction perpendiculaire à la direction de mesure sur des faces opposées de l'objet (20).

7. Dispositif de mesure selon l'une des revendications précédentes, dans lequel le premier moyen de mesure de distance comporte un premier moyen de mesure par coupe optique avec un premier moyen destiné à générer une première bande de lumière de mesure (42a, 42b, 42c) sur la première surface principale (46) de l'objet (20); et le deuxième moyen de mesure de distance (28) comporte un deuxième moyen de mesure par coupe optique avec un deuxième destiné à générer une deuxième bande de lumière de mesure sur la deuxième surface principale de l'objet (20).

8. Dispositif de mesure selon la revendication 7, dans lequel le premier moyen destiné à générer une première bande de lumière de mesure et le deuxième moyen destiné à générer une deuxième bande de lumière de mesure comportent, chacun, un laser.

9. Dispositif de mesure selon la revendication 8, dans lequel le premier moyen destiné à générer une première bande de lumière de mesure et le deuxième moyen destiné à générer une deuxième bande de lumière de mesure comportent, chacun, une source de lumière blanche.

10. Dispositif de mesure selon l'une des revendications 7 à 9, dans lequel le premier moyen destiné à générer une première bande de lumière de mesure et le deuxième moyen destiné à générer une deuxième bande de lumière de mesure sont disposés de sorte que la première bande de lumière de mesure (42a, 42b, 42c) et la deuxième bande de lumière de mesure soient opposées l'une à l'autre sur des surfaces principales opposées de l'objet (20).

11. Dispositif de mesure selon l'une des revendications 7 à 10, dans lequel le premier moyen de mesure de distance (26) comporte un troisième moyen de mesure de distance (50) avec un troisième moyen destiné à générer une troisième bande de lumière de mesure sur la première surface principale de l'objet (20); et
le deuxième moyen de mesure de distance (28) comporte un quatrième moyen de mesure par coupe optique (52) avec un quatrième moyen destiné à générer une quatrième bande de lumière de mesure sur la deuxième surface principale de l'objet (20), les bandes de lumière de mesure générées par le premier moyen destiné à générer une bande de lumière de mesure et par le troisième moyen destiné à générer une troisième bande de lumière de mesure sur la première surface principale de l'objet (20) se chevauchant spatialement dans une zone de recouvrement sur la première surface principale de l'objet; et les bandes de lumière de mesure générées par le deuxième moyen destiné à générer la deuxième bande de lumière de mesure et par le quatrième moyen destiné à générer la quatrième bande de lumière de mesure sur la deuxième surface principale de l'objet (20) se chevauchant spatialement dans une zone de recouvrement sur la deuxième surface principale de l'objet (20).

12. Dispositif de mesure selon la revendication 11, dans lequel le moyen d'évaluation est réalisé de manière à adapter l'une à l'autre une information de distance du premier et du troisième moyen de mesure par coupe optique dans la zone de recouvrement, pour obtenir une information de distance adaptée, de sorte que le premier et le troisième moyen de mesure par coupe optique présentent, dans la zone de recouvrement, un écart par rapport à l'information de distance adaptée qui se situe dans une plage de tolérance prédéterminée.

13. Procédé pour déterminer l'épaisseur de matériau d'un objet, aux étapes suivantes consistant à:
déterminer une première distance entre un premier moyen de mesure de distance se présentant sous forme de moyen de mesure par coupe optique et une première surface principale de l'objet tournée vers le premier moyen de mesure de distance dans une direction de mesure sensiblement perpendiculaire à la première surface principale de l'objet, et
déterminer simultanément une distance entre une première surface principale de référence d'un objet de référence (40a) d'une épaisseur prédéterminée et le premier dispositif de mesure de distance dans la direction de mesure;
déterminer une deuxième distance entre un deuxième moyen de mesure de distance se présentant sous forme de moyen de mesure par coupe optique et une deuxième surface principale de l'objet opposée à la première surface principale dans la direction de mesure et déterminer simultanément une distance entre une deuxième surface principale de référence de l'objet de référence (40a) opposée à la première surface principale de référence et le deuxième dispositif de mesure de distance (28) dans la direction de mesure; et
déterminer l'épaisseur de matériau de l'objet entre la première surface principale et la deuxième surface principale à l'aide de la première et de la deuxième distance ainsi que de l'épaisseur prédéterminée, de la distance entre la première surface principale de référence et le premier moyen de mesure de distance (26) et de la distance entre la deuxième surface principale de référence et le deuxième moyen de mesure de distance (28).

14. Procédé selon la revendication 13, dans lequel la première distance, la deuxième distance sont déterminées sans contact.
